Europäisches Patentamt

European Patent Office

Office européen des brevets

(19)

(11) **EP 1 129 988 B1**

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(51) Int Cl.$^7$: **C01B 3/48**

(21) Anmeldenummer: **01103389.1**

(22) Anmeldetag: **14.02.2001**

(54) **Verfahren zum Betreiben einer Gaserzeugungsvorrichtung bzw. eines Brennstoffzellensystems, Gaserzeugungsvorrichtung und Brennstoffzellensystem**

Method for operating a gas generating device or a fuel cell system , gas generating device and fuel cell system

Méthode pour opérer un dispositif de production de gaz ou un système de piles à combustible ,dispositif de production de gaz et système de piles à combustible

(84) Benannte Vertragsstaaten:
**DE FR GB IT**

(30) Priorität: **02.03.2000 DE 10010069**

(43) Veröffentlichungstag der Anmeldung:
**05.09.2001 Patentblatt 2001/36**

(73) Patentinhaber: **Ballard Power Systems AG**
**73230 Kirchheim / Teck-Nabern (DE)**

(72) Erfinder: **Keppeler, Berthold, Dr.**
**73230 Kirchheim/Teck (DE)**

(74) Vertreter: **Beyer, Andreas, Dr. et al**
**Wuesthoff & Wuesthoff,**
**Patent- und Rechtsanwälte,**
**Schweigerstrasse 2**
**81541 München (DE)**

(56) Entgegenhaltungen:
**EP-A- 0 920 064**     **EP-A- 0 921 585**
**DE-A- 19 727 841**     **DE-A- 19 823 499**

EP 1 129 988 B1

**Beschreibung**

Die vorliegende Erfindung betrifft ein Verfahren zum Betreiben einer Gaserzeugungsvorrichtung bzw. eines Brennstoffzellensystems sowie eine Gaserzeugungsvorrichtung und ein Brennstoffzellensystem. Insbesondere betrifft die Erfindung ein Verfahren zum Betreiben einer Gaserzeugungsvorrichtung mit unterschiedlichen Kohlenwasserstoffbrennstoffen wie Methanol, Dimethylether, höhere Alkohole, Benzin, Diesel, LPG (Liquid Petroleum Gas) oder NG (Natural Gas).

Brennstoffzellen besitzen gegenüber Verbrennungskraftmaschinen wegen ihrer Funktionsweise einen höheren energetischen Wirkungsgrad, weshalb sie zunehmend für die Stromerzeugung eingesetzt werden. Dieses schließt sowohl stationäre als auch mobile Anwendungen ein. Brennstoffzellen werden üblicherweise mit Wasserstoff betrieben. Da dieser nur schwer zu speichern ist, versucht man gerade für mobile Anwendungen, wie Kraftfahrzeuge, den Wasserstoff in Form von flüssigen Kraftstoffen bzw. Brennstoffen zu speichern. Derartige Kraftstoffe sind beispielsweise reine Kohlenwasserstoffe oder Alkohole. Für mobile Anwendungen wird heute überwiegend Methanol eingesetzt, das in einer Gaserzeugungsvorrichtung in Wasserstoff und $CO_2$ gespalten wird. Der so erzeugte Wasserstoff wird dann für den Betrieb einer Brennstoffzelle eines Fahrzeuges verwendet. Von Nachteil ist dabei jedoch die noch fehlende Methanolinfrastruktur und die geringe Speicherdichte von Methanol im Vergleich zu erdölbasierten Kraftstoffen. Auch wird der hohe energetische Wirkungsgrad eines Methanol-Brennstoffzellensystems durch die vorgelagerte Methanolherstellung nahezu egalisiert. Die Wasserstofferzeugung aus konventionellen flüssigen Treibstoffen wie Benzin, Diesel oder LPG ist für ein mobiles Brennstoffzellensystem deshalb eine interessante Alternative. Ein solches Brennstoffzellensystem umfaßt eine Brennstoffzelle mit Kühlmedienanschluß und Luftversorgung sowie eine Gaserzeugungsvorrichtung.

In der EP 0 921 585 A2 ist eine Vorrichtung und ein Verfahren mit verbesserten Kaltstarteigenschaften für eine Wasserdampfreformierung eines Kohlenwasserstoffes offenbart. Die Vorrichtung besteht aus einem Verdampfer, einer Reformierungseinrichtung mit mehreren Reformierungsstufen, einer CO-Entfernungseinheit mit einer CO-Shiftstufe und/oder einer CO-Oxidationsstufe und einer katalytischen Brennereinheit. Dabei steht die Brennereinheit mit dem Verdampfer und einem Hauptreformer sowie wenigstens eine Vorreformierungsstufe mit der CO-Shiftstufe oder der CO-Oxidationsstufe über ein wärmeleitendes Trennmedium in Wärmekontakt. Bei einem Kaltstart durchläuft das System einen Aufheizvorgang mit mehreren unterschiedlichen Betriebsphasen, wobei in einer ersten Betriebsphase die Verbindung zwischen CO-Shiftstufe und CO-Oxidationsstufe getrennt wird. Anschließend wird in die CO-Oxidationsstufe ein brennbares Gemisch eingeleitet, das dort katalytisch verbrannt wird, um die CO-Oxidationsstufe und die damit in Wärmekontakt stehende Vorreformierungsstufe aufzuheizen.

In der EP 0 920 064 A1 ist ein Brennstoffzellensystem, das unter anderem einen katalytischen Brenner, einen Brennstoffreformer, einen CO-Shift-Reaktor und einen Reaktor für die partielle Oxidation umfaßt, beschrieben. Die für die endotherme Wasserdampfreformierung benötigte Energie wird mit dem katalytischen Brenner erzeugt. Damit der Reformer die jeweils vom Belastungszustand der Brennstoffzelle abhängige Wasserstoffmenge bereitstellen kann, muß der Wärmeausstoß des Brenners über einen weiten Bereich einstellbar sein. Dazu wird ein sogenannter Vielstoffbetrieb-Brenner vorgeschlagen, der mit flüssigem Brennstoff und/oder den Restwasserstoff des Anodenabgases gespeist wird. Das im Reformer erzeugte wasserstoffhaltige Gas wird in einem CO-Shift-Reaktor und einem partiellen-Oxidations-Reaktor, die hintereinander geschaltet sind, vom Kohlenmonoxid gereinigt.

Die WO 99/31012 offenbart ein Verfahren zum Betreiben einer Anlage zur Wasserstoffreformierung mit verbessertem Kaltstartverhalten. Dazu wird vorgeschlagen, mindestens einen Teil eines Reformierungsreaktors als Mehrfunktions-Reaktoreinheit auszubilden. Die Mehrfunktions-Reaktoreinheit wird während einer ersten Betriebsphase des Kaltstarts als katalytische Brennereinheit und während einer anschließenden zweiten Betriebsphase als Einheit zur partiellen Oxidation des zugeführten Kohlenwasserstoffes verwendet. Neben diesen beiden Funktionen beim Kaltstart übt diese Mehrfunktions-Reaktoreinheit im Normalbetrieb weiterhin mindestens zeitweise eine dritte Funktion als Reformereinheit zur Wasserdampfreformierung des zugeführten Kohlenwasserstoffes und/oder als CO-Shifteinheit zur Umwandlung von unerwünschten Kohlenmonoxid in Kohlendioxid. Der übrige Reformierungsreaktorteil fungiert während der zweiten Betriebsphase des Kaltstartes wenigstens bereichsweise als eine Nachreformierungs- und CO-Shiftkonverterstufe.

Die Reformer-Brennstoffzellen-Systeme des Standes der Technik haben den Nachteil, daß sie entweder für einen Betrieb mit Methanol und/oder Dimethylether oder für einen Vielstoff-Betrieb, d.h. für den Betrieb mit anderen Kohlenwasserstoffen, wie höheren Alkoholen, Benzin, Diesel, LPG (Liquid Petroleum Gas) oder NG (Natural Gas) als Brennstoffe geeignet sind. Bekannterweise kann Wasserstoff aus Kohlenwasserstoffen durch eine partielle-Oxidations-Reformierung, nachfolgend als POX-Reformierung bezeichnet, entsprechend der Gleichung:

$$- (CH_2) - + 1/2O_2 \text{ (Luft)} \Rightarrow H_2 + CO$$

und/oder die endotherme Dampfreformierung entsprechend der Gleichung:

$$-(CH_2)- + 2H_2O \Rightarrow 3H_2 + CO_2$$

erzeugt werden. Es ist auch eine Kombination der beiden Prozesse möglich, die zu autothermen Betriebsweisen führt. Systeme für den Betrieb mit Methanol/Dimethylether arbeiten in einem niedrigen Temperaturbereich, wobei der Wasserstoff im wesentlichen durch Wasserdampfreformierung erzeugt wird, und zeichnen sich durch einen hohen Systemwirkungsgrad aus. Diese Systeme können allerdings nicht mit anderen Kohlenwasserstoffbrennstoffen betrieben werden. Systeme für den Vielstoffbetrieb sind für hohe Temperaturen ausgelegt, wobei der Wasserstoff im wesentlichen durch POX- beziehungsweise autotherme Reformierung erzeugt wird. Diese Systeme können zwar auch Methanol/Dimethylether sehr gut umsetzen, arbeiten dann jedoch im Vergleich zu den Niedertemperatursystemen bei einem schlechteren Wirkungsgrad.

Demgegenüber liegt der Erfindung die Aufgabe zugrunde, ein Verfahren zum Betrieb einer Gaserzeugungsvorrichtung sowie eines Brennstoffzellensystems bereitzustellen, mit dem sowohl Methanol/Dimethylether als auch andere Kohlenwasserstoffe bei vernünftigen Wirkungsgraden in ein wasserstoffreiches Gas umgewandelt werden.

Zur Lösung dieser Aufgabe wird zum einen ein Verfahren mit den Merkmalen des Anspruches 1, zum anderen eine Gaserzeugungsvorrichtung mit den Merkmalen des Anspruches 15 vorgeschlagen.

Demnach wird eine Gaserzeugungsvorrichtung, bei der eine erste Gasreinigungseinheit ein CO-Shift-Reaktor ist, in Abhängigkeit von dem verwendeten Brennstoff auf zwei unterschiedliche Betriebsarten betrieben. Die erste Betriebsart der Gaserzeugungsvorrichtung, bei der der CO-Shift-Reaktor als eine CO-Shifteinheit betrieben wird, kommt zum Einsatz, wenn eine erste Gruppe von Brennstoffen als Brennstoff verwendet wird. Diese erste Gruppe von Brennstoffen umfaßt längerkettige Kohlenwasserstoffe, so wie höhere Alkohole, Benzin, Diesel, LPG (Liquid Petrol Gas) und NG (Natural Gas), mit Ausnahme von Methanol und Dimethylether. Verwendet man dagegen Brennstoffe aus der zweiten Gruppe von Brennstoffen, nämlich Methanol und/oder Dimethylether, wird die Gaserzeugungsvorrichtung in einer zweiten Betriebsart betrieben, wobei der CO-Shift-Reaktor durch Einbringen von Methanol/Dimethylether in denselben als eine Reformierungseinheit betrieben wird.

Der POX- beziehungsweise autotherme Reformer der Gaserzeugungsvorrichtung, in dem je nach Eduktzusammensetzung, d.h. nach Zusammensetzung des zugeführten Stoffgemisches eine Reformierung durch partielle Oxidation und/oder eine Wasserdampfreformierung stattfindet, wird bei hohen Temperaturen betrieben. Der Edukt-Brennstoff wird dem Reformer flüssig oder vorzugsweise mittels Verdampfer gasförmig zugegeben. Bei der Verwendung von längerkettigem Kohlenwasserstoff als Brennstoff, entsteht neben Wasserstoff sehr viel Kohlenmonoxid. Dieses wird in dem CO-Shift-Reaktor durch die Zugabe von Wasser zu Kohlendioxid und Wasserstoff umgesetzt. In dem Reformer kann auch Methanol und/oder Dimethylether als Brennstoff umgesetzt werden, allerdings mit einem schlechteren Wirkungsgrad im Vergleich zu einer Dampfreformierung bei tieferen Temperaturen.

Durch zusätzliches Einbringen von Methanol und/oder Dimethylether in den CO-Shift-Reaktor kann dort aus diesen Brennstoffen Wasserstoff über eine Wasserdampfreformierung erzeugt werden. Da der CO-Shift-Reaktor im Vergleich zu dem Reformierungsreaktor bei einer geringeren Betriebstemperatur gefahren wird, weist die Wasserdampfreformierung im CO-Shift-Reaktor einen vergleichsweisen hohen Wirkungsgrad auf. Die in dem CO-Shift-Reaktor verwendeten Katalysatormaterialien für die CO-Shiftreaktion sind auch aktive Katalysatoren für eine Dampfreformierungsreaktion von Methanol/Dimethylether. Weiterhin liegen auch die Betriebsparameter Druck und Temperatur des CO-Shift-Reaktors im CO-Shift-Betrieb in einem ähnlichen Bereich wie dem für die Wasserdampfreformierung von Methanol/Dimethylether, so daß der CO-Shift-Reaktor auch als eine Dampfreformierungseinheit betrieben werden kann.

Das System besitzt dadurch im Betrieb mit Methanol hervorragende Kaltstarteigenschaften und ist gegenüber Verunreinigungen des Methanols mit langkettigen Kohlenwasserstoffen weniger empfindlich. Man erhält somit ein sehr dynamisches System, das nicht nur für den Betrieb mit Kohlenwasserstoffen, sondern auch für den mit Methanol/Dimethylether einen vernünftigen Wirkungsgrad aufweist. Die erfindungsgemäße Gaserzeugungsvorrichtung kann mit beiden Arten von Brennstoffen mit vernünftigen Wirkungsgraden betrieben werden, wobei hierfür keine zusätzlichen Einrichtungen vorzusehen sind. Dadurch wird eine kompakte Bauweise der Gaserzeugungsvorrichtung gefördert, wie sie gerade für mobile Anwendungen von Bedeutung ist. Die Gaserzeugungsvorrichtung kann hinsichtlich des Brennstoffes sehr leicht an eine vorhandene Brennstoff-Infrastruktur angepaßt werden.

Vorteilhafte Ausgestaltungen der Erfindung ergeben sich aus den Unteransprüchen.

Bei einer vorteilhaften Ausgestaltung der Erfindung wird der Reformer bei der zweiten Betriebsart der Gaserzeugungsvorrichtung im wesentlichen als POX- und/oder autothermer Reformer betrieben und in demselben nur so viel Methanol/Dimethylether umgesetzt, daß dessen Abwärme ausreicht, um einen großen Anteil des in den CO-Shift-Reaktor eingegebenen Methanols/Dimethylethers mittels Wasserdampfreformierung in wasserstoffreiches Gas zu überführen. Diese Vorgehensweise ist aus energetischen Gesichtspunkten zweckmäßig, weil die exotherme POX-Reformierungsreaktion, die bzgl. der Wasserstofferzeugung einen schlechteren Wirkungsgrad aufweist, die Wärme zum Betreiben des CO-Shift-Reaktors als Wasserdampfreformierungseinheit mit hohem Wirkungsgrad erzeugt. Dadurch wird der energetische Wirkungsgrad der Gaserzeugungsvorrichtung erhöht.

Bei einer weiteren zweckmäßigen Ausführungsform der Erfindung wird der Reformer während einer Kaltstartphase mit flüssigem Brennstoff und Luft als POX- und/oder autothermer Reformer und bei warmgelaufener Vorrichtung auch mit gasförmigem Brennstoff und Wasserdampf betrieben, wobei Brennstoff und Wasser im Verdampfer verdampft werden, der durch den Brenner erhitzt wird, und dann dem Reformer gasförmig zugeführt werden. Aufgrund der exothermen POX-Reformierung ist der Reformer kaltstartfähig und die dem Reformer nachgeschalteten Komponenten werden außerdem durch den heißen Reformerproduktstrom erwärmt. Sobald die Gaserzeugungsvorrichtung warmgelaufen ist, kann der Reformer auch mit gasförmigen Brennstoffen betrieben werden. Die benötigte Energie für den Verdampfer und den Reformer wird durch einen Brenner, der vorzugsweise ein katalytischer Brenner ist, erzeugt.

Bei einer zweckmäßigen Fortbildung der Erfindung sind Wärmetauscher am katalytischen Brenner und Verdampfer bzw. zwischen Reformer und CO-Shift-Reaktor vorgesehen. Durch diese Maßnahmen können die Eduktstoffe des Reformers erhitzt und die Reformerproduktstoffe abgekühlt werden, wodurch die energetische Bilanz der Gaserzeugungsvorrichtung verbessert wird.

Bei einer weiteren vorteilhaften Ausgestaltung der Erfindung ist vorgesehen, daß dem Wasser im Wassertank Methanol als Frostschutzmittel zugegeben ist. Gerade bei einer Gaserzeugungsvorrichtung für den mobilen Einsatz muß sichergestellt werden, daß der Wassertank für Edukt- und Shiftwasser bei Umgebungstemperaturen unter dem Gefrierpunkt nicht einfriert. Herkömmliche Antifrostmittel müssen vor dem Zuführen des Wassers in den Reformer bzw. den CO-Shift-Reaktor abgetrennt werden, da diese für den Gaserzeugungsprozeß untauglich sind. Demgegenüber kann das Methanol ohne weiteres im Reformer und auch im CO-Shift-Reaktor über eine Wasserdampfreformierung in ein wasserstoffreiches Gas umgesetzt werden. Dadurch wird nicht nur Frostschutz gewährleistet, sondern auch die Wasserstoffausbeute der Gaserzeugungsvorrichtung erhöht.

Bei einer vorteilhaften Weiterbildung der Erfindung, bei der die Gaserzeugungsvorrichtung zusammen mit mindestens einer Brennstoffzelle ein Brennstoffzellensystem bildet, ist vorgesehen, dem Reformer der Gaserzeugungsvorrichtung den Brennstoff sowohl flüssig als auch gasförmig zuzuführen. Die aus dem gasförmig zugeführten Brennstoff gewonnene Wasserstoffmenge ist zum Abdecken einer Grundlast der Brennstoffzelle vorgesehen und die Wasserstoffmenge zum Abdecken von Laständerung/Lastspitzen der Brennstoffzelle wird durch Zugabe des flüssigen Brennstoffes erzeugt. Verdampfer stellen träge Systeme dar und sind folglich für eine dynamische Gaserzeugungsvorrichtung, die auf schnelle Lastwechsel reagiert, nicht optimal geeignet. Hohe Lastspreizungen können durch den alleinigen Einsatz von Verdampfern nur eingeschränkt realisiert werden, wobei diese durch einen Betrieb in einem weiten Lastbereich extrem belastet und somit deren Lebensdauer reduziert wird. Eine reine Flüssigdosierung über eine Einspritzdüse ist ebenfalls schwierig, wenn man große Lastspreizungen realisieren möchte. Die vollständige Verdampfung und homogene Vermischung einer großen Flüssigkeitsmenge in einem Gasstrom ist nicht unproblematisch. Zudem sind Flüssigkeitstropfen auf dem Katalysatormaterial eines Reformierungsreaktors ungünstig für ein gutes Umsatzverhalten und die Langzeitaktivität des Katalysatorsystems. Durch die gasförmige und flüssige Zuführung des Brennstoffes erhält man ein besseres Verhältnis von Flüssigkeitsmenge zum Gasstrom, wobei durch eine entsprechende Flüssigkeitszugabe schnell auf Laständerungen und auftretende Lastspitzen reagiert werden kann.

Die Erfindung ist anhand eines Ausführungsbeispieles in der Zeichnung dargestellt und wird im folgenden unter Bezugnahme auf die Zeichnung näher erläutert, wobei

Fig. 1 ein Blockschaltbild einer erfindungsgemäßen Gaserzeugungsvorrichtung mit einer Brennstoffzelle und mit einer Kühlstromführung in einer ersten Betriebsart und

Fig. 2 das Blockschaltbild gemäß Fig. 1 mit einer Kühlstromführung in einer zweiten Betriebsart zeigt.

Die in der Zeichnung dargestellte erfindungsgemäße Gaserzeugungsvorrichtung 1 umfaßt einen Reformer 2, zwei CO-Reinigungseinheiten 4, 5, einen katalytischen Brenner 6 mit Verdampfer 8 sowie zwei Wärmetauscher 3, 7. An die Gaserzeugungsvorrichtung 1 ist mindestens eine Brennstoffzelle 9 angeschlossen, die eine Anode 9a und eine Kathode 9b umfaßt. Der Übersichtlichkeit halber ist in der Figur nur eine einzelne Brennstoffzelle dargestellt, jedoch ist in der Praxis ein aus einen Stapel mehrerer Brennstoffzellen gebildeter Brennstoffzellenblock vorgesehen (sogenannter 'Stack').

Der katalytische Brenner 6 wird mit Luftsauerstoff und Brennstoff über Zuführungen 17, 18 betrieben. Dabei kommen die für den Reformierungsreaktor 2 vorgesehenen Brennstoffe, also beispielsweise Methanol, Dimethylether, höhere Alkohole, Benzin, Diesel oder ähnliche Kohlenwasserstoffe zum Einsatz. Beim Betrieb der Gaserzeugungsvorrichtung 1 mit einer Brennstoffzelle 9 wird dem Brenner 6 über Leitungen 21 und 22 die Abluft der Kathode 9b und das Abgas der Anode 9a zugeführt und somit wird der Restwasserstoff der Abluft als zusätzlicher Brennstoff verwendet.

Dem katalytischen Brenner 6 ist der Verdampfer 8 nachgeschaltet, der mit den heißen Abgasen des Brenners 6 betrieben wird. Der Verdampfer 8 weist eine Zuführung 20 zum Einbringen von Wasser und Brennstoff auf, wobei der Brennstoff einer der oben genannten Gruppen von Brennstoffen angehört. Obwohl in der Zeichnung nicht dargestellt ist es auch möglich, für die'Verdampfung von Brennstoff und Wasser separate Verdampfer 8 vorzusehen. Der Wärmetauscher 7 ist an dem Brenner 6 und/oder dem Verdampfer 8 angeordnet. Über eine Zuführung 19 wird Umgebungsluft in den Wärmetauscher 7 eingeleitet und in diesem erhitzt.

Dieser wird dann über eine Dosiervorrichtung 10 in den Reformierungsreaktor 2 dosiert.

Der Reformierungsreaktor 2 wird mit flüssigem und/oder gasförmigem Brennstoff sowie Luftsauerstoff betrieben. Zu diesem Zweck sind dem Reformierungsreaktor 2 die Dosiereinrichtung 10 für Luftsauerstoff, eine Dosiereinrichtung 11 für flüssigen Brennstoff, die vorzugsweise eine Einspritzdüse ist, und eine Dosiereinrichtung 12 für gasförmigen Brennstoff und Wasserdampf vorgeschaltet. Die Dosiereinrichtungen 10, 11 und 12 werden über eine (nicht dargestellte) Steuereinrichtung gesteuert. Der Reformierungsreaktor 2 ist mit einem geeigneten Katalysatormaterial, z.B. einem Edelmetallkatalysator befüllt. Je nach der Eduktzusammensetzung wird der Reformierungsreaktor 2 als POX-Reaktor, d.h. als Reaktor für eine reine partielle Oxidations-Reformierung, beziehungsweise zusätzlich als Wasserdampfreformierungsreaktor, das heißt autotherm betrieben. Dem Reformierungsreaktor 2 ist der Wärmetauscher 3 nachgeschaltet, der den Produktgasstrom, d.h. das wasserstoffhaltige Gas mit Kohlenmonoxidanteilen, abkühlt und dabei den gasförmigen Brennstoff und den Wasserdampf erhitzt, die zuvor im Verdampfer 8 verdampft wurden.

Das wasserstoffhaltige Reformierungsgas mit Kohlenmonoxidanteilen durchläuft zwei Gasreinigungseinheiten 4, 5, wobei die erste Gasreinigungseinheit 4 ein CO-Shift-Reaktor und die zweite Gasreinigungseinheit 5 vorzugsweise ein Reaktor für die selektive Oxidation von Kohlenmonoxid ist. Die beiden Gasreinigungseinheiten 4, 5 sind seriell hintereinander geschaltet, wobei der CO-Shift-Reaktor 4 als erste von dem Reformierungsgas zu durchströmende Einheit vorgesehen ist. Zwischen dem Wärmetauscher 3 und dem CO-Shift-Reaktor 4 ist eine Zuführung 16 vorgesehen, über die Shift-Wasser und/oder Brennstoff eingebracht werden. Das wasserstoffreiche Reformierungsgas durchströmt die Gasreinigungseinheiten 4, 5 und wird der Brennstoffzelle 9 zugeführt.

Der CO-Shift-Reaktor 4 wird gemäß einer ersten Betriebsart der Gaserzeugungsvorrichtung 1 als CO-Shift-Einheit und gemäß einer zweiten Betriebsart der Gaserzeugungsvorrichtung 1, die bei der Verwendung von Methanol/Dimethylether als Brennstoff eingesetzt wird, als eine Wasserdampfreformierungseinheit betrieben. Bei dem Betrieb als CO-Shift-Einheit 4 wird dem heißen Gasstrom über die Zuführung 16 flüssiges Wasser injiziert, wobei das Kohlenmonoxid im CO-Shift-Reaktor 4 mit dem Shift-Wasser zu Kohlendioxid und Wasserstoff umgesetzt wird. Dabei wird ein herkömmlicher CO-Shift-Reaktor mit bekanntem Katalysatormaterial verwendet. Die Reaktionsparameter Druck und Temperatur für eine CO-Shift-Reaktion entsprechen den Reaktionsbedingungen für eine Wasserdampfreformierung von Methanol/Dimethylether. Die in CO-Shift-Reaktoren verwendeten Katalysatormaterialien sind auch für die Wasserstoffdampfreformierung von Methanol/Dimethylether aktive Katalysatoren. Deshalb kann der CO-Shift-Reaktor 4 einfach durch Zuführen von Methanol/Dimethylether anstatt des Wassers über die Zuführung 16 als eine Wasserdampfreformierungseinheit betrieben werden. Zur genaueren Steuerung kann an der Zuführung 16 eine (nicht dargestellte) weitere Dosiervorrichtung vorgesehen sein.

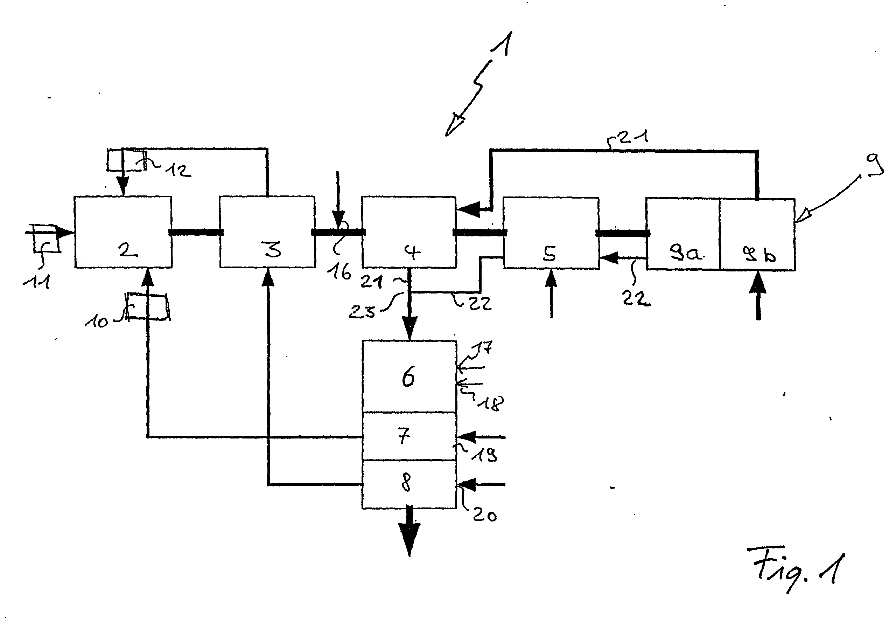

Beim Betrieb in der ersten Betriebsart (siehe Fig. 1) ist die Leitung 21 für die Abluft der Kathode 9b durch die erste Gasreinigungseinheit 4 hindurch geführt, um die Gasreinigungseinheit 4 zu kühlen und die Abluft für die Verbrennung im Brenner 6 vorzuwärmen. Die Leitung 22 für das Abgas der Anode 9a ist durch die zweite Gasreinigungseinheit 5 hindurch geführt, um die Gasreinigungseinheit 5 zu kühlen und das Abgas für die Verbrennung im Brenner 6 vorzuwärmen. Die Leitungen 21 und 22 sind über eine Verbindung 23 vor dem Brenner 6 zusammengeführt.

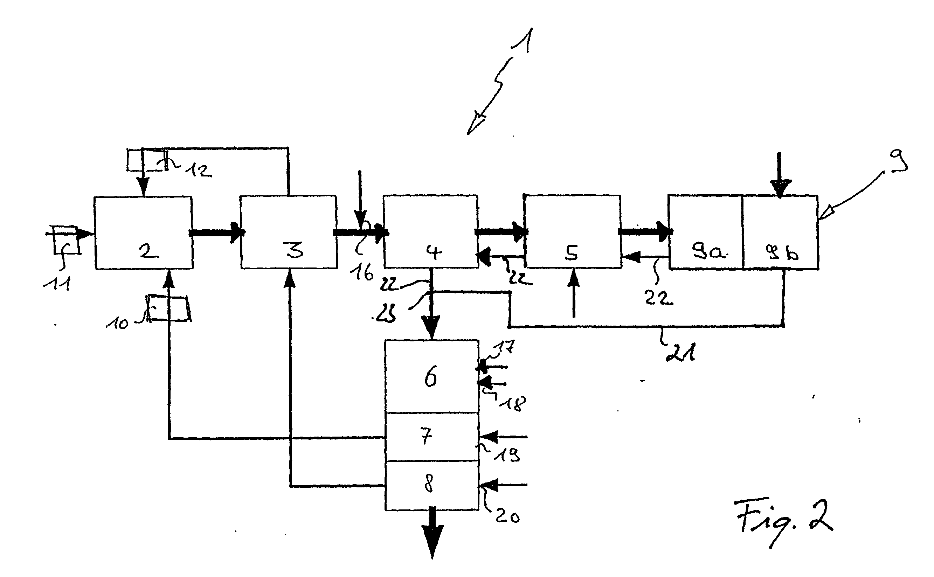

Beim Betrieb der Gaserzeugungsvorrichtung 1 in der zweiten Betriebsart wird die Eduktzusammensetzung, d.h. die Zusammensetzung des Stoffgemisches, das über die Dosiereinrichtung 10 bis 12 in den Reformierungsreaktor 2 dosiert wird, so gewählt, daß der Reformierungsreaktor 2 im wesentlichen als eine POX-Reformierungseinheit 2 arbeitet. Die POX-Reformierungsreaktion ist exotherm, wohingegen die Dampfreformierungsreaktion im CO-Shift-Reaktor 4 endotherm ist. In dem Reformierungsreaktor wird zweckmäßig deshalb nur so viel Methanol/Dimethylether umgesetzt, daß die Abwärme ausreicht, um die umzusetzende Methanol/Dimethylethermenge im CO-Shift-Reaktor einer Wasserdampfreformierung zu unterwerfen. In dieser zweiten Betriebsart (siehe Fig. 2) ist der CO-Shift-Reaktor 4 von der Kühlung durch die Kathodenabluft der Brennstoffzelle 1 abgetrennt. Das heißt, der CO-Shift-Reaktor 4 wird nicht von der Abluftleitung 21 durchströmt. Diese wird vielmehr direkt vor dem Brenner 6 über die Verbindung 23 mit der Anodenabgasleitung 22 zusammengeführt. Die Anodenabgasleitung 22 ist in diesem Fall zuerst durch die zweite Gasreinigungseinheit 5 und anschließend durch den CO-Shift-Reaktor 4 geführt, bevor sie über die Verbindung 23 vor dem Brenner 6 mit der Abluftleitung 21 zusammengeführt ist. Somit kühlt das Anodenabgas die Gasreinigungseinheit 5 und wird dabei erhitzt, so daß das jetzt heiße Anodenabgas beim anschließenden Durchströmen des CO-Shift-Reaktors 4 diesen beheizt. Dies ist vorteilhaft, da in dieser zweiten Betriebsweise im CO-Shift-Reaktor 4 eine endotherme Wasserdampfreformierung abläuft, bei der das zugeführte Gas entlang des Strömungsweges abkühlt. Somit kann das vorzugsweise im Gegenstrom durch den CO-Shift-Reaktor 4 geführte Anodenabgas für eine ausreichende Temperaturstabilisierung im CO-Shift-Reaktor 4 beitragen.

Die Kühlluftführung für beide Betriebsarten kann durch ein einziges Leitungssystem 21, 22, 23 realisiert werden, wobei zur Umschaltung zwischen den beiden Betriebszuständen entsprechende Schaltvorrichtungen, z.B. Mehrwegeventile, vorgesehen werden, welche jedoch zur Vereinfachung des Blockschaltbildes in der Zeichnung nicht dargestellt sind.

Obwohl das erfindungsgemäße Verfahren beziehungsweise die entsprechende Vorrichtung in dieser Anmeldung vorzugsweise anhand einer mobilen Anwendung beschrieben wurde soll der Schutzbereich nicht darauf beschränkt sein, sondern soll sich auch auf eine entsprechende Anwendung auf stationäre Anlagen erstrecken.

**Patentansprüche**

1. Verfahren zum Betrieb einer Gaserzeugungsvorrichtung (1) zum Erzeugen eines wasserstoffreichen, kohlenmonoxidarmen Gases aus einem Wasser/Brennstoff-Gemisch durch katalytische Wasserdampfreformierung und/oder aus einem Sauerstoff/Brennstoff-Gemisch durch partielle Oxidation, wobei die Gaserzeugungsvorrichtung (1) mindestens einen Reformer (2), einen Brenner (6) sowie eine erste (4) und eine zweite Gasreinigungseinheit (5) umfaßt,
**dadurch gekennzeichnet,**
**daß** die Gaserzeugungsvorrichtung (1) in einer ersten Betriebsart mit einem Brennstoff oder einem Brennstoffgemisch aus einer ersten Gruppe von Brennstoffen und in einer zweiten Betriebsart mit einem Brennstoff oder einem Brennstoffgemisch aus einer zweiten Gruppe von Brennstoffen betrieben wird, und daß die erste Gasreinigungseinheit (4) ein CO-Shift-Reaktor ist, der in der ersten Betriebsart als eine CO-Shift-Einheit (4) und in der zweiten Betriebsart durch Einbringen (16) von Brennstoff aus der zweiten Gruppe von Brennstoffen als eine Reformierungseinheit (4) betrieben wird.

2. Verfahren nach Anspruch 1, **dadurch gekennzeichnet, daß** die erste Gruppe von Brennstoffen Kohlenwasserstoffe, insbesondere höhere Alkohole, Benzin, Diesel, LPG und NG, mit Ausnahme von Methanol und Dimethylether umfaßt und die zweite Gruppe von Brennstoffen Methanol und Dimethylether umfaßt.

3. Verfahren nach einem der Ansprüche 1 bis 2, **dadurch gekennzeichnet, daß** der Reformer (2) in der zweiten Betriebsart im wesentlichen als POX-Reformer (2) betrieben und in demselben nur soviel Brennstoff umgesetzt wird, daß die Abwärme ausreicht, um einen großen Anteil des den CO-Shift-Reaktor (4) zugeführten Brennstoffes mittels Wasserdampfreformierung in wasserstoffreiches Gas zu überführen.

4. Verfahren nach einem der Ansprüche 1 bis 3, **dadurch gekennzeichnet, daß** der Reformer (2) in beiden Betriebsarten während einer Kaltstart-Phase mit flüssigem Brennstoff und Luft als POX-Reformer (2) betrieben wird.

5. Verfahren nach Anspruch 4, **dadurch gekennzeichnet, daß** die Gaserzeugungsvorrichtung (1) einen Verdampfer (8) umfaßt und daß der Reformer (2) anschließend an den Kaltstart bei warmgelaufener Vorrichtung auch mit gasförmigem Brennstoff und Wasserdampf betrieben wird, wobei Brennstoff und Wasser im Verdampfer (8) verdampft werden, der durch den Brenner (6) erhitzt wird, und dann dem Reformer (2) gasförmig zugeführt werden.

6. Verfahren nach einem der Ansprüche 1 bis 5, **dadurch gekennzeichnet, daß** mittels eines Wärmetauschers (7), der am Brenner (6) und/oder Verdampfer (8) vorgesehen ist, die dem Reformer (2) zuzuführende Luft erhitzt wird.

7. Verfahren nach einem der Ansprüche 1 bis 6, **dadurch gekennzeichnet, daß** mittels eines Wärmetauschers (3), der zwischen dem Reformer (2) und dem CO-Shift-Reaktor (4) vorgesehen ist, die Reformerproduktgase abgekühlt sowie im Verdampfer (8) verdampfte Brennstoffe und Wasser erhitzt werden, bevor diese dem Reformer (2) zugeführt werden.

8. Verfahren nach einem der Ansprüche 1 bis 7, **dadurch gekennzeichnet, daß** die Gaserzeugungsvorrichtung (1) einen Wassertank umfaßt und daß dem Wasser im Wassertank eine geeignete Menge Methanol als Frostschutzmittel zugesetzt wird.

9. Verfahren nach einem der Ansprüche 1 bis 8, **dadurch gekennzeichnet, daß** die zweite Gasreinigungseinheit (5) ein CO-Shift-Reaktor, ein selektiver CO-Oxidation-Reaktor, ein CO-Methanisierungs-Reaktor oder eine Membranvorrichtung zum Abtrennen des Wasserstoffes ist.

10. Verfahren nach einem der Ansprüche 1 bis 9, **dadurch gekennzeichnet, daß** der Brenner (6) ein katalytischer Brenner ist.

11. Verfahren zum Betreiben eines Brennstoffzellensystems, **dadurch gekennzeichnet, daß** das Brennstoffzellensystem eine Gaserzeugungsvorrichtung (1) und mindestens eine Brennstoffzelle (9) umfaßt, wobei die Gaserzeugungsvorrichtung (1) nach dem Verfahren nach einem der Ansprüche 1 bis 10 betrieben wird.

12. Verfahren nach Anspruch 11, **dadurch gekennzeichnet, daß** in der ersten Betriebsart der Gaserzeugungsvorrichtung (1) die Abluft der Brennstoffzelle (9) die erste (4) und die zweite Gasreinigungseinheit (5) und in der zweiten Betriebsart der Gaserzeugungsvorrichtung (1) die zweite Gasreinigungseinheit (5) kühlt.

13. Verfahren nach einem der Ansprüche 11 bis 12, **dadurch gekennzeichnet, daß** Abluft der Brennstoffzelle (9) als Brennstoff für den Brenner (6) verwendet wird.

14. Verfahren nach einem der Ansprüche 11 bis 13, **dadurch gekennzeichnet, daß** dem Reformer (2) der Brennstoff sowohl flüssig als auch gasförmig zugeführt wird, wobei die aus dem gasförmig zugeführten Brennstoff gewonnene Wasserstoffmenge zum Abdecken einer Grundlast der Brennstoffzelle (9) verwendet wird und die benötigte Wasserstoffmenge zum Abdecken von Laständerungen und/oder Lastspitzen der Brennstoffzelle (9) durch Zugabe des flüssigen Brennstoffes erzeugt wird.

15. Gaserzeugungsvorrichtung zum Erzeugen eines wasserstoffreichen, kohlenmonoxidarmen Gases aus einem Wasser/Brennstoff-Gemisch durch katalytische Wasserdampfreformierung und/oder aus einem Sauerstoff/Brennstoff-Gemisch durch partielle Oxidation, wobei die Gaserzeugungsvorrichtung (1) mindestens einen Reformer (2), einen Brenner (6), eine erste (4) und eine zweite Gasreinigungseinheit (5) umfaßt,
**dadurch gekennzeichnet,**
**daß** die Gaserzeugungsvorrichtung (1) in einer ersten Betriebsart mit einem Brennstoff oder einem Brennstoffgemisch aus einer ersten Gruppe von Brennstoffen und in einer zweiten Betriebsart mit einem Brennstoff oder einem Brennstoffgemisch aus einer zweiten Gruppe von Brennstoffen betreibbar ist, und daß die erste Gasreinigungseinheit (4) ein CO-Shift-Reaktor ist, der in der ersten Betriebsart als eine CO-Shift-Einheit (4) und in der zweiten Betriebsart über eine Zuführung (16) durch Einbringen von Brennstoff aus der zweiten Gruppe von Brennstoffen als eine Reformierungseinheit (4) betreibbar ist.

16. Gaserzeugungsvorrichtung nach Anspruch 15, **dadurch gekennzeichnet, daß** die erste Gruppe von Brennstoffen Kohlenwasserstoffe, insbesondere höhere Alkoholen, Benzin, Diesel und LPG, mit Ausnahme von Methanol und Dimethylether umfaßt und die zweite Gruppe von Brennstoffen Methanol und Dimethylether umfaßt.

17. Gaserzeugungsvorrichtung nach einem der Ansprüche 15 bis 16, **dadurch gekennzeichnet, daß** der Reformer (2) in der zweiten Betriebsart im wesentlichen als POX-Reformer (2) betreibbar ist und dieser nur soviel Brennstoff umsetzt, daß die Abwärme ausreicht, um einen großen Anteil des den CO-Shift-Reaktor (4) zugeführten Brennstoffes mittels Wasserdampfreformierung in wasserstoffreiches Gas zu überführen.

18. Gaserzeugungsvorrichtung nach einem der Ansprüche 15 bis 17, **dadurch gekennzeichnet, daß** der Reformer (2) in beiden Betriebsarten während einer Kaltstart-Phase mit flüssigem Brennstoff und Luft als POX-Reformer (2) betreibbar ist.

19. Gaserzeugungsvorrichtung nach Anspruch 18, **dadurch gekennzeichnet, daß** die Gaserzeugungsvorrichtung (1) einen Verdampfer (8) umfaßt und daß der Reformer (2) anschließend an den Kaltstart bei warmgelaufener Vorrichtung auch mit gasförmigen Brennstoff und Wasserdampf betreibbar ist, wobei der Brenner (6) den Verdampfer (8) erhitzt und der Verdampfer (8) dem Reformer (2) zuzuführenden Brennstoff und Wasser verdampft.

20. Gaserzeugungsvorrichtung nach einem der Ansprüche 15 bis 19, **dadurch gekennzeichnet, daß** ein Wärmetauscher (7) an dem Brenner (6) und/oder dem Verdampfer (8) angeordnet ist, um die dem Reformer (2) zuzuführende Luft zu erhitzen.

21. Gaserzeugungsvorrichtung nach einem der Ansprüche 15 bis 20, **dadurch gekennzeichnet, daß** ein Wärmetauscher (3) zwischen dem Reformer (2) und dem CO-Shift-Reaktor (4) angeordnet ist, um die Reformerproduktgase abzukühlen sowie dem Reformer (2) zuzuführende Brennstoffe sowie Wasser/Wasserdampf zu erhitzen.

22. Gaserzeugungsvorrichtung nach einem der Ansprüche 15 bis 21, **dadurch gekennzeichnet, daß** die Gaserzeugungsvorrichtung (1) einen Wassertank umfaßt und daß der Wassertank Wasser eine geeignete Menge Methanol als Frostschutzmittel enthält.

23. Gaserzeugungsvorrichtung nach einem der Ansprüche 15 bis 22, **dadurch gekennzeichnet, daß** die zweite Gasreinigungseinheit (5) ein CO-Shift-Reaktor, ein selektiver CO-Oxidation-Reaktor, ein CO-Methanisierungs-Reaktor oder eine Membranvorrichtung zum Abtrennen des Wasserstoffes ist.

**24.** Gaserzeugungsvorrichtung nach einem der Ansprüche 15 bis 23, **dadurch gekennzeichnet, daß** der Brenner (6) ein katalytischer Brenner ist.

**25.** Brennstoffzellensystem, **dadurch gekennzeichnet, daß** das Brennstoffzellensystem eine Gaserzeugungsvorrichtung (1) nach einem der Ansprüche 15 bis 24 und mindestens eine Brennstoffzelle (9) umfaßt.

**26.** Brennstoffzellensystem nach Anspruch 25, **dadurch gekennzeichnet, daß** in der ersten Betriebsart der Gaserzeugungsvorrichtung (1) die Abluft der Brennstoffzelle (9) die erste (4) und die zweite Gasreinigungseinheit (5) und in der zweiten Betriebsart der Gaserzeugungsvorrichtung (1) die zweite Gasreinigungseinheit (5) kühlt.

**27.** Brennstoffzellensystem nach einem der Ansprüche 25 bis 26, **dadurch gekennzeichnet, daß** der Brenner (6) die Abluft der Brennstoffzelle (9) verbrennt.

**28.** Brennstoffzellensystem nach einem der Ansprüche 25 bis 27, **dadurch gekennzeichnet, daß** dem Reformer (2) der Brennstoff sowohl flüssig als auch gasförmig zuführbar ist, wobei die aus dem gasförmig zugeführten Brennstoff erzeugte Wasserstoffmenge eine Grundlast der Brennstoffzelle (9) abdeckt und die aus dem flüssigen Brennstoff erzeugte Wasserstoffmenge Laständerungen und/oder Lastspitzen der Brennstoffzelle (9) abdeckt.

**Claims**

**1.** Method for operating a gas generating device (1) for generating a hydrogen-rich, low-carbon-monoxide gas from a water/fuel mixture by catalytic steam reforming and and/or from an oxygen/fuel mixture by partial oxidation, the gas generating device (1) comprising at least a reformer (2), a burner (6) and a first gas purifying unit (4) and a second gas purifying unit (5), **characterized in that** the gas generating device (1), in a first operating mode, is operated with a fuel or a fuel mixture from a first group of fuels and, in a second operating mode, with a fuel or a fuel mixture from a second group of fuels, and **in that** the first gas purifying unit (4) is a CO shift reactor which, in the first operating mode, is operated as a CO shift unit (4) and, in the second operating mode, is operated as a reforming unit (4) as a result of the introduction (16) of fuel from the second group of fuels.

**2.** Method according to Claim 1, **characterized in that** the first group of fuels comprises hydrocarbons, in particular higher alcohols, petrol, diesel, LPG and NG, with the exception of methanol and dimethyl ether, and the second group of fuels comprises methanol and dimethyl ether.

**3.** Method according to one of Claims 1 to 2, **characterized in that** the reformer (2), in the second operating mode, is substantially operated as a POX reformer (2) and converts just enough fuel for the heat released to be sufficient to convert a large proportion of the fuel fed to the CO shift reactor (4) into hydrogen-rich gas by means of steam reforming.

**4.** Method according to one of Claims 1 to 3, **characterized in that**, during a cold-start phase, the reformer (2), in both operating modes, is operated with liquid fuel and air as a POX reformer (2).

**5.** Method according to Claim 4, **characterized in that** the gas generating device (1) comprises an evaporator (8), and **in that** the reformer (2), following the cold start, when the device has warmed up, is also operated with gaseous fuel and steam, fuel and water being evaporated in the evaporator (8), which is heated by the burner (6), and then being fed to the reformer (2) in gas form.

**6.** Method according to one of Claims 1 to 5, **characterized in that** the air which is to be fed to the reformer (2) is heated by means of a heat exchanger (7) which is provided at the burner (6) and/or evaporator (8).

**7.** Method according to one of Claims 1 to 6, **characterized in that**, by means of a heat exchanger (3), which is provided between the reformer (2) and the CO shift reactor (4), the reformer product gases are cooled and fuels and water which have been evaporated in the evaporator (8) are heated before they are fed to the reformer (2).

**8.** Method according to one of Claims 1 to 7, **characterized in that** the gas generating device (1) comprises a water tank, and **in that** a suitable quantity of methanol as antifreeze is added to the water in the water tank.

**9.** Method according to one of Claims 1 to 8, **characterized in that** the second gas purifying unit (5) is a CO shift reactor, a selective CO oxidation reactor, a CO methanizing reactor or a membrane device for separating off the hydrogen.

**10.** Method according to one of Claims 1 to 9, **characterized in that** the burner (6) is a catalytic burner.

**11.** Method for operating a fuel cell system, **characterized in that** the fuel cell system comprises a gas generating device (1) and at least one fuel cell (9), the gas generating device (1) being operated using the method according to one of Claims 1 to 10.

12. Method according to Claim 11, **characterized in that**, in the first operating mode of the gas generating device (1), the outgoing air from the fuel cell (9) cools the first gas purifying unit (4) and the second gas purifying unit (5) and, in the second operating mode of the gas generating device (1), the outgoing air from the fuel cell (9) cools the second gas purifying unit (5).

13. Method according to one of Claims 11 to 12, **characterized in that** outgoing air from the fuel cell (9) is used as fuel for the burner (6).

14. Method according to one of Claims 11 to 13, **characterized in that** the fuel is fed to the reformer (2) in both liquid and gas form, the quantity of hydrogen obtained from the fuel supplied in gas form being used to cover a base load of the fuel cell (9), and the quantity of hydrogen required to cover load changes and/or load peaks in the fuel cell (9) being generated by addition of the liquid fuel.

15. Gas generating device for generating a hydrogen-rich, low-carbon-monoxide gas from a water/fuel mixture by catalytic steam reforming and/or from an oxygen/fuel mixture by partial oxidation, the gas generating device (1) comprising at least a reformer (2), a burner (6), a first gas purifying unit (4) and a second gas purifying unit (5), **characterized in that** the gas generating device (1), in a first operating mode, can be operated with a fuel or a fuel mixture from a first group of fuels and, in a second operating mode, can be operated with a fuel or a fuel mixture from a second group of fuels, and **in that** the first gas purifying unit (4) is a CO shift reactor which, in the first operating mode, can be operated as a CO shift unit (4) and, in the second operating mode, can be operated as a reforming unit (4) as a result of a supply (16) through introduction of fuel from the second group of fuels.

16. Gas generating device according to Claim 15, **characterized in that** the first group of fuels comprises hydrocarbons, in particular higher alcohols, petrol, diesel and LPG, with the exception of methanol and dimethyl ether, and the second group of fuels comprises methanol and dimethyl ether.

17. Gas generating device according to one of Claims 15 and 16, **characterized in that** the reformer (2), in the second operating mode, can be substantially operated as a POX reformer (2) and converts just enough fuel for the heat released to be sufficient to convert a large proportion of the fuel fed to the CO shift reactor (4) into hydrogen-rich gas by means of steam reforming.

18. Gas generating device according to one of Claims 15 to 17, **characterized in that**, during a cold-start phase, the reformer (2), in both operating modes can be operated with liquid fuel and air as a POX reformer (2).

19. Gas generating device according to Claim 18, **characterized in that** the gas generating device (1) comprises an evaporator (8), and **in that** the reformer (2), following the cold start, when the device has warmed up, can also be operated with gaseous fuel and steam, the burner (6) heating the evaporator (8) and the evaporator (8) evaporating water and fuel to be fed to the reformer (2).

20. Gas generating device according to one of Claims 15 to 19, **characterized in that** a heat exchanger (7) is arranged at the burner (6) and/or the evaporator (8), in order to heat the air to be fed to the reformer (2).

21. Gas generating device according to one of Claims 15 to 20, **characterized in that** there is a heat exchanger (3) between the reformer (2) and the CO shift reactor (4), in order to cool the reformer product gases and to heat water/steam and fuels to be fed to the reformer (2).

22. Gas generating device according to one of Claims 15 to 21, **characterized in that** the gas generating device (1) comprises a water tank, and **in that** the water tank contains water and a suitable quantity of methanol as antifreeze.

23. Gas generating device according to one of Claims 15 to 22, **characterized in that** the second gas purifying unit (5) is a CO shift reactor, a selective CO oxidation reactor, a CO methanizing reactor or a membrane device for separating off the hydrogen.

24. Gas generating device according to one of Claims 15 to 23, **characterized in that** the burner (6) is a catalytic burner.

25. Fuel cell system, **characterized in that** the fuel cell system comprises a gas generating device (1) according to one of Claims 15 to 24 and at least one fuel cell (9).

26. Fuel cell system according to Claim 25, **characterized in that**, in the first operating mode of the gas generating device (1), the outgoing air from the fuel cell (9) cools the first gas purifying unit (4) and the second gas purifying unit (5) and, in the second operating mode of the gas generating device (1), the outgoing air from the fuel cell (9) cools the second gas purifying unit (5).

27. Fuel cell system according to one of Claims 25 to 26, **characterized in that** the burner (6) burns the outgoing air from the fuel cell (9).

28. Fuel cell system according to one of Claims 25 to 27, **characterized in that** the fuel can be fed to the reformer (2) in both liquid and gas form, the quantity of hydrogen which is generated from the fuel supplied in gas form covering a base load of the fuel cell (9), and the quantity of hydrogen generated from the liquid fuel covering load changes and/or load peaks in the fuel cell (9).

## Revendications

1. Procédé de fonctionnement d'un dispositif de production de gaz (1) pour la production d'un gaz riche en hydrogène et pauvre en monoxyde de carbone à partir d'un mélange eau/combustible par reformage de vapeur d'eau catalytique et/ou à partir d'un mélange oxygène/combustible par oxydation partielle, le dispositif de production de gaz (1) comprenant au moins un reformeur (2), un brûleur (6) ainsi qu'une première (4) et une seconde unité de purification de gaz (5),
   **caractérisé en ce que**,
   le dispositif de production de gaz (1) est actionné dans un premier mode opératoire avec un combustible ou un mélange de combustibles d'un premier groupe de combustibles et, dans un second mode opératoire, avec un combustible ou un mélange de combustibles d'un second groupe de combustibles, et **en ce que** la première unité de purification de gaz (4) est un réacteur de transformation de CO (4) lequel est, dans le premier mode opératoire, actionné comme une unité de transformation de CO (4) et, dans le second mode opératoire, comme une unité de reformage (4) par introduction (16) de combustible du second groupe de combustibles.

2. Procédé selon la revendication 1, **caractérisé en ce que** le premier groupe de combustibles comprend des hydrocarbures, en particulier des alcools supérieurs, essence, diesel, LPG et gaz naturel, excepté le méthanol et l'éther diméthylique, et **en ce que** le second groupe de combustibles comprend du méthanol et de l'éther diméthylique.

3. Procédé selon l'une des revendications 1 à 2, **caractérisé en ce que** le reformeur (2) est actionné dans le second mode opératoire pour l'essentiel comme un reformeur POX (2) et dans lequel il est utilisé uniquement une quantité de combustible telle que le rejet de chaleur suffit à convertir par reformage de vapeur d'eau une grande part du combustible introduit dans le réacteur de transformation de CO (4) en un gaz riche en hydrogène.

4. Procédé selon l'une ces revendications 1 à 3, **caractérisé en ce que** le reformeur (2) est, dans les deux modes opératoires, actionné comme reformeur POX (2) avec du combustible liquide et de l'air pendant une phase de démarrage à froid.

5. Procédé selon la revendication 4, **caractérisé en ce que** le dispositif de production de gaz (1) comprend un vaporisateur (8), et **en ce que** le reformeur (2) est, une fois la phase de démarrage à froid terminée, lorsque ledit dispositif est en marche, également actionné avec un combustible gazeux et de la vapeur, le combustible et l'eau étant vaporisés dans le vaporisateur (8), lequel est chauffé par le brûleur (6), et ensuite introduits sous forme gazeuse dans le reformeur (2).

6. Procédé selon l'une des revendications 1 à 5, **caractérisé en ce que** l'air à introduire dans le reformeur (2) est chauffé à l'aide d'un échangeur thermique (7) qui est prévu sur le brûleur (6) et/ou sur le vaporisateur (8).

7. Procédé selon l'une des revendications 1 à 6, **caractérisé en ce que** les gaz de synthèse issus du reformeur sont, à l'aide d'un échangeur thermique (3) prévu entre le reformeur (2) et le réacteur de transformation de CO (4), refroidis et les combustibles et l'eau vaporisés dans le vaporisateur (8) chauffés avant d'être introduits dans le reformeur (2).

8. Procédé selon l'une des revendications 1 à 7, **caractérisé en ce que** le dispositif de production de gaz (1) comprend un réservoir d'eau, et **en ce qu'**une quantité appropriée de méthanol est ajoutée comme antigel à l'eau contenue dans ledit réservoir.

9. Procédé selon l'une des revendications 1 à 8, **caractérisé en ce que** la seconde unité de purification de gaz (5) est un réacteur de transformation de CO, un réacteur d'oxydation sélective de CO, un réacteur de méthanisation de CO ou un dispositif à membrane permettant la séparation de l'hydrogène.

10. Procédé selon l'une ces revendications 1 à 9, **caractérisé en ce que** le brûleur (6) est un brûleur catalytique.

11. Procédé de fonctionnement d'un système de piles à combustible, **caractérisé en ce que** le système de piles à combustible comprend un dispositif de production de gaz (1) et au moins une pile à combustible (9), le dispositif de production de gaz (1) étant actionné conformément au procédé selon l'une des revendications 1 à 10.

**12.** Procédé selon la revendication 11, **caractérisé en ce que**, dans le premier mode opératoire du dispositif de production de gaz (1), la première (4) et la seconde unité de purification de gaz (5) et, dans le deuxième mode opératoire du dispositif de production de gaz (1), la seconde unité de purification de gaz (5) sont refroidies par l'air d'échappement de la pile à combustible (9).

**13.** Procédé selon l'une des revendications 11 à 12, **caractérisé en ce que** l'air d'échappement de la pile à combustible (9) est utilisée comme combustible pour le brûleur (6).

**14.** Procédé selon l'une des revendications 11 à 13, **caractérisé en ce que** le combustible est introduit aussi bien sous forme liquide que sous forme gazeuse dans le reformeur (2), la quantité d'hydrogène obtenue à partir du combustible introduit sous forme gazeuse étant utilisée pour la couverture d'une charge de base de la pile à combustible (9) et la quantité d'hydrogène requise pour la couverture des modifications et/ou des pointes de charge de la pile à combustible (9) étant obtenue par addition du combustible liquide.

**15.** Dispositif de production de gaz (1) pour la production d'un gaz riche en hydrogène et pauvre en monoxyde de carbone à partir d'un mélange eau/combustible par reformage de vapeur d'eau catalytique et/ou à partir d'un mélange oxygène/combustible par oxydation partielle, le dispositif de production de gaz (1) comprenant au moins un reformeur (2), un brûleur (6) ainsi qu'une première (4) et une seconde unité de purification de gaz (5), **caractérisé en ce que** le dispositif de production de gaz (1) peut être actionné dans un premier mode opératoire avec un combustible ou un mélange de combustibles d'un premier groupe de combustibles et dans un second mode opératoire avec un combustible ou un mélange de combustibles d'un second groupe de combustibles, et **en ce que** la première unité de purification de gaz (4) est un réacteur de transformation de CO (4) pouvant, dans le premier mode opératoire, être actionné comme une unité de transformation de CO (4) et, dans le second mode opératoire, comme une unité de reformage (4) par introduction (16) de combustible du second groupe de combustibles.

**16.** Dispositif de production de gaz selon la revendication 15, **caractérisé en ce que** le premier groupe de combustibles comprend des hydrocarbures, en particulier des alcools supérieurs, essence, diesel et LPG, excepté le méthanol et l'éther diméthylique, et **en ce que** le second groupe de combustibles comprend du méthanol et de l'éther diméthylique.

**17.** Dispositif de production de gaz selon l'une des revendications 15 à 16, **caractérisé en ce que** le reformeur (2) peut être actionné dans le second mode opératoire pour l'essentiel comme un reformeur POX (2) et utilise uniquement une quantité de combustible telle que le rejet de chaleur suffit à convertir par reformage de vapeur d'eau une grande part du combustible introduit dans le réacteur de transformation de CO (4) en un gaz riche en hydrogène.

**18.** Dispositif de production de gaz selon l'une des revendications 15 à 17, **caractérisé en ce que** le reformeur (2) peut, dans les deux modes opératoires, être actionné comme reformeur POX (2) avec du combustible liquide et de l'air pendant une phase de démarrage à froid.

**19.** Dispositif de production de gaz selon la revendication 18, **caractérisé en ce que** le dispositif de production de gaz (1) comprend un vaporisateur (8), et **en ce que** le reformeur (2) peut, une fois la phase de démarrage à froid terminée, lorsque ledit dispositif est en marche, être également actionné avec un combustible gazeux et de la vapeur, le vaporisateur (8) étant chauffé par le brûleur (6) et le combustible à introduire dans le reformeur (2) et l'eau étant vaporisés dans le vaporisateur (8).

**20.** Dispositif de production de gaz selon l'une des revendications 15 à 19, **caractérisé en ce qu'**un échangeur thermique (7) est disposé sur le brûleur (6) et/ou sur le vaporisateur (8) pour chauffer l'air à introduire dans le reformeur (2).

**21.** Dispositif de production de gaz selon l'une des revendications 15 à 20, **caractérisé en ce qu'**un échangeur thermique (3) est disposé entre le reformeur (2) et le réacteur de transformation de CO (4) pour refroidir les gaz de synthèse issus du reformeur et chauffer les combustibles ainsi que l'eau/la vapeur à introduire dans le reformeur (2).

**22.** Dispositif de production de gaz selon l'une des revendications 15 à 21, **caractérisé en ce que** le dispositif de production de gaz (1) comprend un réservoir d'eau, et **en ce que** l'eau dudit réservoir contient une quantité appropriée de méthanol comme antigel.

**23.** Dispositif de production de gaz selon l'une des revendications 15 à 22, **caractérisé en ce que** la seconde unité de purification de gaz (5) est un réacteur de transformation de CO, un réacteur d'oxydation sélective de CO, un réacteur de méthanisation de CO ou un dispositif à membrane permettant la séparation de l'hydrogène.

24. Dispositif de production de gaz selon l'une des revendications 15 à 23, **caractérisé en ce que** le brûleur (6) est un brûleur catalytique.

25. Système de piles à combustible, **caractérisé en ce que** le système de piles à combustible comprend un dispositif de production de gaz (1) selon l'une des revendications 15 à 24 et au moins une pile à combustible (9).

26. Système de piles à combustible selon la revendication 25,
   **caractérisé en ce que**, dans le premier mode opératoire du dispositif de production de gaz (1), la première (4) et la seconde unité de purification de gaz (5) et, dans le deuxième mode opératoire du dispositif de production de gaz (1), la seconde unité de purification de gaz (5)sont refroidies par l'air d'échappement de la pile à combustible (9).

27. Système de piles à combustible selon l'une des revendications 25 à 26, **caractérisé en ce que** l'air d'échappement de la pile à combustible (9) est brûlé dans le brûleur (6).

28. Système de piles à combustible selon l'une des revendications 25 à 27, **caractérisé en ce que** le combustible peut être introduit aussi bien sous forme liquide que sous forme gazeuse dans le reformeur (2), la quantité d'hydrogène obtenue à partir du combustible introduit sous forme gazeuse couvrant une charge de base de la pile à combustible et la quantité d'hydrogène obtenue à partir du combustible liquide couvrant les modifications de charge et/ou les pointes de charge de la pile à combustible (9).

Fig. 1

EP 1 129 988 B1

Fig. 2